# EUROPÄISCHE PATENTSCHRIFT

(11) **EP 2 632 865 B1**
(45) Veröffentlichungstag und Bekanntmachung des Hinweises auf die Patenterteilung: **30.03.2016**
(21) Anmeldenummer: 11779622.7
(22) Anmeldetag: 28.10.2011
(51) Int. Cl.: C03B 19/10

(54) **VERFAHREN ZUR HERSTELLUNG SYNTHETISCHER QUARZGLASKÖRNUNG**
METHOD FOR PRODUCING SYNTHETIC QUARTZ GLASS GRANULES
PROCÉDÉ DE FABRICATION DE GRANULES EN VERRE DE QUARTZ SYNTHÉTIQUE

(30) Priorität: 28.10.2010 DE 102010049676
(43) Veröffentlichungstag der Anmeldung: 04.09.2013
(73) Patentinhaber: Heraeus Quarzglas GmbH & Co. KG, 63450 Hanau (DE)
(72) Erfinder: LEHMANN, Walter, 04155 Leipzig (DE); KAYSER, Thomas, 04105 Leipzig (DE)
(74) Vertreter: Staudt, Armin Walter
(86) Internationale Anmeldenummer: PCT/EP2011/069068
(87) Internationale Veröffentlichungsnummer: WO 2012/056037

(56) Entgegenhaltungen:
- DE-A1-102005 045 051
- DE-B3-102004 038 602
- JP-A- 5 017 123

## Beschreibung

Die vorliegende Erfindung betrifft ein Verfahren zur Herstellung synthetischer Quarzglaskörnung durch Verglasen eines rieselfähigen SiO₂-Granulats aus porösen Granulatteilchen.

Die dichte Quarzglaskörnung ist zur Herstellung von Quarzglasbauteilen,wie Tiegel, Rohre, Halter, Glocken, Reaktoren für die Halbleiter- oder Lampenfertigung und der chemischen Verfahrenstechnik einsetzbar. Neben hoher Reinheit und chemischer Beständigkeit spielt bei derartigen Fertigungsprozessen häufig eine hohe Temperaturstabilität eine entscheidende Rolle. Als unterer Erweichungspunkt für reines Quarzglas werden in der Literatur Temperaturwerte um 1150 °C angegeben. Häufig liegen die erforderlichen Prozesstemperaturen jedoch höher, so dass es zu plastischen Verformungen der Quarzglasbauteile kommen kann.

### Stand der Technik

Es stellt sich grundsätzlich das Problem, das poröse SiO₂-Granula möglichst blasenfrei zu verdichten. Die porösen Granulatteilchen sind Agglomerate von SiO₂-Teilchen, wie sie beispielsweise bei der Herstellung von synthetischem Quarzglas durch Polymerisation, Polykondensation, Fällung oder CVD-Abscheideverfahren erhalten werden. Wegen ihrer geringen Schüttdichte ist das direkte Einschmelzen derartiger SiO₂-Teilchen problematisch, und sie werden in der Regel anhand üblicher Granulierungsverfahren vorverdichtet. Als Beispiele seien die Rollgranulation, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung genannt.

Die dabei anfallenden diskreten, mechanisch und gegebenenfalls auch thermisch vorverdichteten Partikel setzen sich somit aus einer Vielzahl von Primärpartikeln zusammen und werden hier als "SiO₂-Granulatteilchen" bezeichnet. In ihrer Gesamtheit bilden sie das poröse "SiO₂-Granulat".

Beim Einschmelzen des "SiO₂-Granulats" zu Quarzglas besteht die Gefahr, dass sich geschlossene, gasgefüllte Hohlräume bilden, die aus der hochviskosen Quarzglasmasse nicht oder nur sehr langsam zu entfernen sind und die so zu Blasen im Quarzglas führen. Deshalb ist es für anspruchsvolle Anwendungen in der Regel notwendig, aus den porösen Granulatteilchen dichte, verglaste Quarzglasteilchen zu erzeugen.

In der EP 1 076 043 wird vorgeschlagen, poröses SiO₂-Granulat in eine Brennerflamme einzurieseln, um es darin fein zu verteilen und bei Temperaturen von 2000 bis 2500 °C zu verglasen. Das Granulat wird vorzugsweise durch Sprüh- oder Nassgranulation von Filterstaub erhalten und hat Korngrößen im Bereich von 5 bis 300 µm. Vor dem Verglasen kann es durch Behandlung mit Mikrowellenstrahlung erhitzt und vorverdichtet werden.

Der Sintergrad eines gegebenen Granulatteilchens hängt von seiner Teilchengröße und dem Wärmeeintrag ab, der wiederum von der Aufenthaltsdauer in der Brennerflamme und der Flammentemperatur bestimmt wird. Das Granulat hat jedoch in der Regel eine gewisse Teilchengrößenverteilung, und die Brenngasflamme hat Bereiche unterschiedlicher Strömungsgeschwindigkeiten und Flammentemperaturen. Dies führt zu ungleichmäßigen und wenig reproduzierbaren Sintergraden. Es besteht außerdem die Gefahr, dass die Quarzglasteilchen durch die Brenngase verunreinigt werden. Dabei ist insbesondere eine Beladung mit Hydroxylgruppen bei Einsatz wasserstoffhaltiger Brenngase zu nennen, was mit einer vergleichsweise niedrigen Viskosität des Quarzglases einhergeht.

In der EP 1 088 789 A2 wird zum Verglasen von porösem SiO₂-Granulat vorgeschlagen, das synthetisch erzeugte Granulat zunächst durch Erhitzen in HCl-haltiger Atmosphäre in einem Drehrohrofen zu reinigen, anschließend in einem Fließbett zu kalzinieren und dann in einer vertikalen Fließbettapparatur oder in einem Tiegel unter Vakuum oder Helium oder Wasserstoff zu synthetischer Quarzglaskörnung zu verglasen.

Hierbei handelt es sich um ein diskontinuierliches Verglasungsverfahren, einhergehend mit einer großen thermischen Trägheit des Ofens und demzufolge langen Prozessdauern mit dementsprechend hohem Zeit- und Kostenaufwand mit geringem Durchsatz und einem im Ergebnis relativ teueren Granulat.

Bei einem ähnlichen Verfahren gemäß der JP 10287416 A wird partikelförmiges SiO₂-Gel mit Durchmessern im Bereich von 10 und 1.000 µm kontinuierlich einem Drehrohrofen verdichtet. Dieser umfasst ein Drehrohr aus Quarzglas mit einer Länge von 2 m und einem Innendurchmesser von 200 mm. Das Drehrohr wird mittels Heizern von außen beheizt und ist in mehrere Temperaturzonen aufgeteilt, die den Temperaturbereich von 50 °C bis 1.100 °C abdecken. Das partikelförmige SiO₂-Gel mit Partikelgrößen zwischen 100 und 500 µm wird in dem mit 8 U/min rotierenden Drehrohr durch Zufuhr eines sauerstoffhaltigen Gases von organ i-schen Bestandteilen befreit und zu SiO₂-Pulver gesintert. Die Ofenatmosphäre beim Sintern enthält Sauerstoff und fakultativ Argon, Stickstoff oder Helium.

Das danach erhaltene SiO₂-Pulv enthält jedoch noch Silanolgruppen in hoher Konzentration von nicht weniger als 1.000 Gew.-ppm. Zu deren Beseitigung wird das SiO₂-Pulver abschließend bei einer höheren Temperatur von 1.300 °C in einem Quarzglastiegel mit einem Innendurchmesser von 550 mm in Chargen von 130 kg kalziniert und dicht gesintert.

Die thermische Stabilität eines Drehrohres aus Quarzglas ist für diesen Prozess unzureichend. Im Quarzglastiegel kann es jedoch zu Verbackungen der sinternden Granulatteilchen kommen, die zu einer undefinierten, porenhaltigen Quarzglasmasse führen.

Auch die WO 88/03914 A1 lehrt die Reduktion der BET-Oberfläche eines amorphen, porösen SiO₂-Pulvers unter Einsatz eines Drehrohrofens in einer Helium und/oder Wasserstoff enthaltender Atmosphäre. Bei einer ersten Verfahrensweise wird feiner SiO₂-Sootstaub in einen Drehrohrofens gegeben, unter Luft auf 1200 °C aufgeheizt und bei dieser Temperatur 1 h lang gehalten. Als Ergebnis dieses Prozesses wird ein rieselfähiges, sphärisches Granulat mit Korngrößen von 0,1 bis 5 mm und einer BET-Oberfläche < 1 m²/g genannt. Sootstaub ist jedoch nicht rieselfähig, extrem sinteraktiv und er kann leicht verblasen werden. Die Verarbeitung von Sootstaub in einem Drehrohrofen gestaltet sich daher äußerst problematisch. Bei einer Abwandlung dieser Verfahrensweise wird vorgeschlagen, SiO₂-Sootstaub mit Wasser zu vermischt, so dass eine feuchte krümelige Masse erhalten wird. Diese Masse wird in einen Drehrohrofen gegeben und bei einer Temperatur von 600 °C zu einem Pulver mit Korngrößen von 0,1 bis 3 mm verdichtet. Das so vorverdichtete SiO₂-Pulver wird anschließend in einem separaten Ofen verglast.

Aus der DE 10 2004 038 602 B3 ist ein Verfahren zur Herstellung von elektrogeschmolzenem, synthetischem Quarzglas für den Einsatz in der Lampen- und in der Halbleiterfertigung bekannt. Als Ausgangsmaterial für das elektrogeschmolzene Quarzglas wird thermisch verdichtetes SiO₂-Granulat eingesetzt. Das Granulat wird durch Granulation einer wässrigen Suspension aus amorphen, nanoskaligen, durch Flammenhydrolyse von SiCl₄ erzeugten pyrogenen SiO₂-Partikeln gebildet.

Zwecks Viskositätserhöhung wird das SiO₂-Granulat mit Al₂O₃ dotiert, indem der Suspension Nanopartikel aus pyrogen hergestelltem Al₂O₃ oder ein lösliches Aluminiumsalz beigefügt wird.

Es werden rundliche Granulat-Körner mit Außendurchmessern im Bereich zwischen 160 µm und 1000 µm erhalten, das bei ca. 400 °C im Drehrohrofen getrocknet und bei einer Temperatur von etwa 1420 °C bis auf eine BET-Oberfläche von ca. 3 m²/g verdichtet wird.

Zum vollständigen Verglasen werden die Einzelkörner des Granulats anschließend unter verschiedenen Atmosphären, wie Helium, Wasserstoff oder Vakuum aber ansonsten nicht erläuterten Prozess, vollständig verglast. Das Heizprofil beim Verglasen der Granulate umfasst jeweils ein Aufheizen auf 1400 °C mit einer Aufheizrate von 5°C/min und eine Haltezeit von 120 min. Nach dieser Behandlung sind die einzelnen Granulatkörner in sich verglast. Die Körner liegen einzeln vor, ohne zu einer Masse verschmolzen zu sein.

Das Granulat wird einem Elektroschmelzprozess zu Quarzglas weiterverarbeitet, wie etwa in einem Tiegel zu einem Formkörper erschmolzen oder in einem Tiegelziehverfahren kontinuierlich zu einem Strang gezogen.

Auch hierbei handelt es sich um ein diskontinuierliches Verfahren mit mehreren, kostenintensiven Aufheizprozessen.

Die US 4,225,443 A beschreibt den Einsatz eines Drehrohrofens zur Herstellung von Glaspartikeln für Filterzwecke. Fein gemahlenes Glaspulver mit Partikelgrö**ßen** um 100 µm wird mit Wasser und Bindemittel vermischt und zu Granulat-Partikeln mit Partikelgrößen um 300 µm - 4,5 mm verarbeitet. Diese Partikel werden in einem Drehrohrofen mit einem Drehrohr aus Mullit zu im Wesentlichen sphärischen Pellets mit Größen um 500 - 4000 µm gesintert.

### Technische Aufgabenstellung

Der Erfindung liegt die Aufgabe zugrunde, ein Verfahren anzugeben, das ausgehend von porösem SiO₂-Granulat eine kontinuierliche und preisgünstige Herstellung dichter, synthetischer Quarzglaskörnung ermöglicht.

### Allgemeine Beschreibung der Erfindung

Diese Aufgabe wird ausgehend von einem Verfahren der eingangs genannten Gattung erfindungsgemäß durch ein Verfahren gelöst, das folgende Verfahrensschritte umfasst:
(a) Granulation pyrogen hergestellter Kieselsäure unter Bildung des SiO₂-Granulat aus porösen Granulatteilchen (9),
(b) Trocknen des SiO₂-Granulats,,
(c) Reinigen des SiO₂-Granulats durch Erhitzen in einer halogenhaltigen Atmosphäre in einem Reinigungsofen,
(d) Verglasen des gereinigten SiO₂-Granulats durch Sintern in einem Verglasungsofen unter Bildung der Quarzglaskörnung,
wobei das Trocknen, Reinigen und Verglasen des SiO₂-Granulats jeweils in einem um eine Mittelachse rotierenden Drehrohr eines Drehrohrofens erfolgt, wobei der zum Verglasen eingesetzte Drehrohrofen ein Drehrohr aufweist, dessen Innenwandung aus einem keramischen Werkstoff, nämlich aus Al₂O₃ besteht, der eine höhere Erweichungstemperatur als undotiertes Quarzglas hat, der als Dotierstoff die Viskosität von Quarzglas erhöht, und der durch Abrieb als Dotierstoffquelle für die Quarzglaskörnung dient, wodurch eine Al₂O₃-Dotierung der Quarzglaskörnung im Bereich von 1 bis 20 Gew.-ppm erzeugt wird, und wobei das Drehrohr mit einem stickstoffarmen Behandlungsgas geflutet oder mit dem Behandlungsgas gespült wird, das mindestens 30 Vol.-% Helium und/oder Wasserstoff enthält.

Das SiO₂-Granulat wird erhalten, indem pyrogen hergestellte Kieselsäure - im Folgenden auch als "SiO₂-Sootstaub" bezeichnet - anhand üblicher Granulierungsverfahren vorverdichtet wird. Die Granulierung kann unter Einsatz eines Drehrohres erfolgen, wie aus dem Stand der Technik bekannt. Wesentlich ist jedoch, dass sich die an die Granulatherstellung anschließenden thermischen Behandlungsschritte, nämlich Trocknen, Reinigen und Verglasen, jeweils in einem Drehrohrofen erfolgen. Dadurch wird ein weitgehend kontinuierlicher Herstellungsprozess erreicht und ein Wechsel des Ofensystems vermieden. Dies erleichtert die zeitliche Abstimmung und räumliche Anpassung bei aufeinander folgenden Behandlungsschritten und trägt zu einer Verkürzung der Durchlaufzeit des Granulats bei.

Die Drehrohröfen sind auf die spezifischen Anforderungen des jeweiligen Behandlungsschritts angepasst. Dabei kann ein Drehrohrofen in mehrere voneinander abgeschottete Behandlungsräume unterteilt sein. Insbesondere können bei bereist weitgehend trockenem Granulat das Fertigtrocknen und Reinigen in einem Verfahrensschritt in einem Reinigungsofen erfolgen. Im Idealfall ist aber für jeden der Behandlungsschritte Trocknen, Reinigen und Verglasen ein eigener Drehrohrofen vorgesehen. Dadurch können Behandlungsdauer, -temperatur und - atmosphäre jeweils unabhängig voneinander an den jeweiligen Prozess optimiert werden, was zu einem qualitativ besseren Endprodukt führt. Dadurch kann beispielsweise bei den Übergängen vom Trocknen zum Reinigen und vom Reinigen zum Verglasen jeweils die Restwärme vom Vorprozess genutzt werden.

Die Behandlungen erfolgen jeweils in Drehrohröfen mit einem um eine Mittelachse rotierenden, beheizten Drehrohr. Dieses ist in Längsrichtung des Ofens leicht geneigt, um einen Transport des Granulats von seiner Einlaufseite zur Auslaufseite herbeizuführen.

Dabei ergeben sich wegen der hohen Temperatur und der damit verbundenen Materialbelastung besondere Anforderungen beim Verglasen im Drehrohrofen, die im Folgenden näher erläutert werden.

Über die Länge des Drehrohres gesehen wird beim Verglasen ein Temperaturprofil mit einem Temperaturmaximum erzeugt, das höher liegt als die Erweichungstemperatur von Quarzglas, also oberhalb von 1150 °C. Um dies ohne Verformung des Drehrohres zu ermöglichen, besteht die Innenwandung des Drehrohrs aus einer temperaturfesten Keramik mit höherer Erweichungstemperatur als undotiertes Quarzglas, nämlich aus Al₂O₃. Diese Substanz erhöht gleichzeitig die Viskosität von Quarzglas.

Der Werkstoff der Drehrohr-Innenwandung hat in dem Fall die zusätzliche Eigenschaft, dass er einen Dotierstoff enthält, der zu einer Erhöhung der Viskosität von Quarzglas und damit zu einer Verbesserung der thermischen Stabilität von Quarzglasbauteilen beiträgt. Die porösen Granulatteilchen, die den Dotierstoff nicht oder in einer nicht ausreichenden Konzentration enthalten, werden in dem Drehrohr kontinuierlich erhitzt und dabei umgewälzt. Durch den Kontakt mit der den Dotierstoff enthaltenden Innenwandung ergibt sich ein feinteiliger Abrieb, der zu einer gewünschten Dotierung der Granulatteilchen führt oder dazu beiträgt. Der Dotierstoff liegt im Quarzglas in der Regel als Oxid vor. Ein Kerngedanke des erfindungsgemäßen Verfahrens besteht somit darin, das vollständige Verglasen der porösen SiO₂-Granulatteilchen in einem Drehrohrofen bei hoher Temperatur durchzuführen, was ermöglicht wird durch eine geeignete Atmosphäre beim Verglasen und durch einen temperaturfesten Werkstoff für das Drehrohr, der gleichzeitig durch Abrieb als Dotierstoffquelle für die Quarzglaskörnung dient. Dieses Verfahren ermöglicht ein kontinuierliches Verglasen der SiO₂-Granulatteilchen und dabei gleichzeitig das homogene Beladen mit dem die Viskosität erhöhenden Dotierstoff.

Als Dotierstoff in diesem Sinne dient Al₂O₃. Al₂O₃ zeichnet sich durch eine hohe Temperaturfestigkeit, eine gute Temperaturwechselbeständigkeit sowie Korrosionsfestigkeit aus. Bei Einsatz eines Al₂O₃-haltigen Drehrohres kann so auf einfache Art und Weise eine Al₂O₃-Dotierung der Quarzglaskörnung im Bereich von 1 bis 20 Gew-ppm erzeugt werden.

Das Drehrohr ist einteilig oder es besteht aus mehreren Teilen, wobei die Drehrohr-Innenwandung mindestens über diejenige Teillänge, die der maximalen Temperaturbelastung ausgesetzt ist, aus der temperaturfesten Keramik besteht. Die Innenwandung ist integraler Bestandteil des Drehrohres oder sie ist beispielsweise als Innenauskleidung des Drehrohres ausgeführt.

Die Granulatteilchen werden in dem Drehrohr auf eine Temperatur erhitzt, die zum Verglasen genügt. Die daraus nach dem Verglasen erhaltenen Quarzglasteilchen haben eine spezifische Oberfläche von weniger als 1 cm²/g (ermittelt nach DIN ISO 9277- Mai 2003; "Bestimmung der spezifischen Oberfläche von Feststoffen durch Gasadsorption nach dem BET-Verfahren"). Die Oberfläche ist dicht, wobei die Teilchen transparent oder teilweise opak sein können.

Damit das Verglasen der Schüttung aus porösem SiO₂-Granula im Drehrohr gelingt, ist weitere Voraussetzung eine Atmosphäre, die Helium und/oder Wasserstoff enthält. Nur in einer Helium und/oder Wasserstoff enthaltenden Atmosphäre ist ein blasenfreies oder besonders blasenarmes Einschmelzen der porösen Granulatteilchen erreichbar. Gegebenenfalls eingeschlossene Gase bestehen zum großen Teil (beispielsweise mindestens 90 Vol.-%) aus Helium. Anteile von Wasserstoff, das bei der Weiterverarbeitung der verglasten Quarzglaskörnung ebenfalls leicht ausdiffundieren kann, sind unschädlich, sowie geringe Anteile weiterer Gase.

Gemäß der Erfindung ist daher vorgesehen, dass das Drehrohr beim Verglasen entweder mit einem Behandlungsgas geflutet ist oder dass es mit diesem Behandlungsgas kontinuierlich oder von Zeit zu Zeit gespült wird, wobei das Behandlungsgas zu mindestens 30 Vol.-% aus Helium und/oder Wasserstoff besteht und gleichzeitig möglichst wenig - im Idealfall keinen - Stickstoff enthält. Denn es hat sich gezeigt, dass in Gegenwart von Stickstoff verglaste Granulatteilchen zu einem höheren Blasengehalt neigen.

Beim Durchwandern des Drehrohres sind die Granuratteilchen mechanischen Kräften ausgesetzt, die durch das Gewicht und die Umwälzung der Schüttung erzeugt werden. Etwaige Agglomerate der verglasten Körnung werden dabei wieder aufgelöst.

Das Verglasen im Drehrohrofen umfasst einen Durchlauf oder mehrere Durchläufe. Im Fall mehrere Durchläufe kann die Temperatur von Durchlauf zu Durchlauf erhöht werden. Es hat sich gezeigt, dass bei mehreren Durchläufen eine geringere Blasigkeit der Quarzglaskörnung erzielt wird.

Das Trocknen des Granulats gemäß Verfahrensschritt (b) erfolgt vorzugsweise durch Erwärmen unter Luft bei einer Temperatur im Bereich zwischen 200 und 600 °C.

Bei dieser Verfahrensweise ist für das Trocknen des Granulats ein separater Trocknungsofen vorgesehen, der als Drehrohrofen ausgebildet ist. Die Temperatur ist konstant oder wird bei Trocknungsfortschritt erhöht. Bei Temperaturen unterhalb von 200 °C ergeben sich lange Trocknungsdauern. Oberhalb von 600 °C kann es zu einem raschen Austritt eingeschlossener Gase kommen, der zur Zerstörung der Granulate führen kann.

Das Reinigen im Drehrohr gemäß Verfahrensschritt (c) erfolgt unter chlorhaltiger Atmosphäre bei einer Temperatur im Bereich zwischen 900 und 1250 °C.

Die chlorhaltige Atmosphäre bewirkt insbesondere eine Reduzierung an Alkali- und Eisenverunreinigungen aus dem SiO₂-Granulat Bei Temperaturen unterhalb von 900 °C ergeben sich lange Behandlungsdauern und bei Temperaturen oberhalb von 1250 °C besteht die Gefahr des Dichtsinterns des porösen Granulats unter Einschluss von Chlor-oder gasförmigen Chlorverbindungen.

Sofern nichts anderes gesagt ist, beziehen sich die folgenden Erläuterungen auf vorteilhafte Ausgestaltungen beim Verglasen des Granulats im Drehrohrofen.

Im Hinblick auf besonders hohe Dichte und geringen Blasengehalt hat sich ein Behandlungsgas beim Verglasen bewährt, das mindestens 50 Vol.-% Helium und/oder Wasserstoff enthält, vorzugsweise mindestens 95 Vol.-%. Der Restanteil kann durch inerte Gase wie Argon oder durch Stickstoff und/oder Sauerstoff gebildet werden, wobei der Volumenanteil der beiden zuletzt genannten Gase vorzugsweise weniger als 30 % beträgt.

Die Granulatteilchen werden im Drehrohr auf eine Temperatur erhitzt, die ein Verglasen bewirkt. Bewährt hat sich eine Temperatur im Bereich von 1300 °C bis 1600 °C.

Bei Temperaturen von weniger als 1300 °C ist zum vollständigen Verglasen eine lange Behandlungsdauer erforderlich. Vorzugsweise beträgt die Temperatur mindestens 1450 °C. Bei Temperaturn oberhalb von 1600 °C werden Drehrohr und Ofen thermisch übermäßig belastet.

Die mechanische Beanspruchung der Granulate durch die Rotation des Drehrohres vermindert die Gefahr von Agglomeratbildungen. Bei hohen Temperaturen oberhalb von etwa 1400 °C kommt es jedoch zum teilweisen Erweichen des Quarzglases, so dass es in Bereichen mit geringer Bewegung zu Anhaftungen an der Drehrohrwandung kommen kann.

Um dies zu verhindern, ist bei einer bevorzugten Verfahrensweise vorgesehen, dass die Granulatteilchen einer Vibration unterzogen werden.

Die Vibration kann durch Rütteln, Stoßen oder Ultraschall erzeugt werden. Sie erfolgt regelmäßig oder impulsartig von Zeit zu Zeit.

Die hohe Verglasungs-Temperatur kann durch Brenner erzeugt werden, die auf die Granulatteilchen einwirken. Bevorzugt ist jedoch eine Verfahrensweise, bei der das Erhitzen mittels einer das Drehrohr umgebenden Widerstandsheizeinrichtung erfolgt.

Der Wärmeeintrag über das Drehrohr erfordert eine Ausführung aus einer temperaturstabilen Keramik, wie oben erläutert. Dadurch wird verhindert, dass die Granulatteilchen mechanisch (durch Verblasen) oder chemisch (durch Verunreinigungen) von einem Brenngas beeinflusst werden.

Bei hohen Temperaturen können die Granulatteilchen und die verglasten Quarzglasteilchen durch Abrieb des Materials der Drehrohr-Innenwandung verunreinigt werden. Bereits geringe Alkaligehalte erhöhen die Entglasungsneigung von Quarzglas beträchtlich. Daher weist der Werkstoff der Drehrohr-Innenwandung vorzugsweise einen Alkaligehalt von weniger als 0,5% auf.

Für eine Dotierung der Quarzglasteilchen mit Al₂O₃ wird dieser Kontamination durch Verunreinigungen entgegengewirkt, wenn die Drehrohr-Innenwandung aus synthetisch hergestelltem Al₂O₃ besteht.

Synthetisch hergestelltes Al₂O₃ mit einer Reinheit von mehr als 99 Gew.-% ist unter dem Handelsnamen "Alsint" bekannt. Um Materialkosten zu minimieren, kann der synthetische Werkstoff auf den Bereich einer dünnen Innenauskleidung des Drehrohres beschränkt sein.

Abgesehen von einer etwaigen metallischen Einfassung besteht das Drehrohr im einfachsten Fall vollständig aus der Keramik.

Das erfindungsgemäße Verfahren führt zu besonders guten Ergebnissen, wenn die Granulatteilchen eine mittlere Korngröße zwischen 100 und 2000 µm, vorzugsweise zwischen 200 µm und 400 µm, aufweisen.

Granulatteilchen mit einer Korngröße von mehr als 1000 µm lassen sich nur langsam verglasen. Teilchen mit einer mittleren Korngröße von weniger als 20 µm neigen zu Agglomerationen.

Für ein möglichst gleichmäßiges Verglasen der Granulatteilchen und eine möglichst homogene Beladung mit Dotierstoff sind etwa gleiche Teilchengrößen vorteilhaft. Im Hinblick hierauf hat es sich bewährt, wenn die Granulatteilchen eine enge Teilchengrößenverteilung aufweisen, bei der der dem D₉₀-Wert zugeordnete Teilchendurchmesser maximal doppelt so groß ist wie der dem D₁₀-Wert zugeordnete Teilchendurchmesser.

Eine enge Teilchengrößenverteilung zeigt eine vergleichsweise geringe Schüttdichte, was einer Agglomeration beim Verlasen entgegenwirkt. Außerdem entfällt bei im Idealfall monomodaler Größenverteilung der Granulatteilchen der Gewichtsunterschied zwischen den Teilchen als Parameter für eine etwaige Separierung innerhalb der Schüttung, was einem gleichmäßigeren Verglasen der Schüttung förderlich ist.

Die verglasten Quarzglasteilchen sind zur Herstellung von Bauteilen aus opakem oder transparentem Quarzglas einsetzbar, wie beispielsweise eines Rohres aus opakem Quarzglas, das in einem Schleuderverfahren hergestellt wird. Sie können auch als teilchenförmiges Ausgangsmaterial zur Herstellung eines Quarzglaszylinders im sogenannten Verneuil-Verfahren eingesetzt werden.

Vorzugsweise werden die Quarzglasteilchen jedoch zur Herstellung eines Quarzglastiegels eingesetzt, insbesondere zur Herstellung der Außenschicht des Tiegels.

Die viskositätserhöhende Wirkung des Dotierstoffs der Quarzglasteilchen trägt zu einer Verlängerung der Standzeit des Quarzglastiegels bei.

### Ausführungsbeispiel

Nachfolgend wird die Erfindung anhand eines Ausführungsbeispiels und einer Zeichnung näher erläutert. Als einzige Figur zeigt in schematischer Darstellung
- **Figur 1**: einen Drehrohrofen zur Durchführung des Verglasungsschritts beim erfindungsgemäßen Verfahren in einer Seitenansicht, und
- **Figur 2**: ein Temperaturprofil über der Länge des Drehrohrofens.

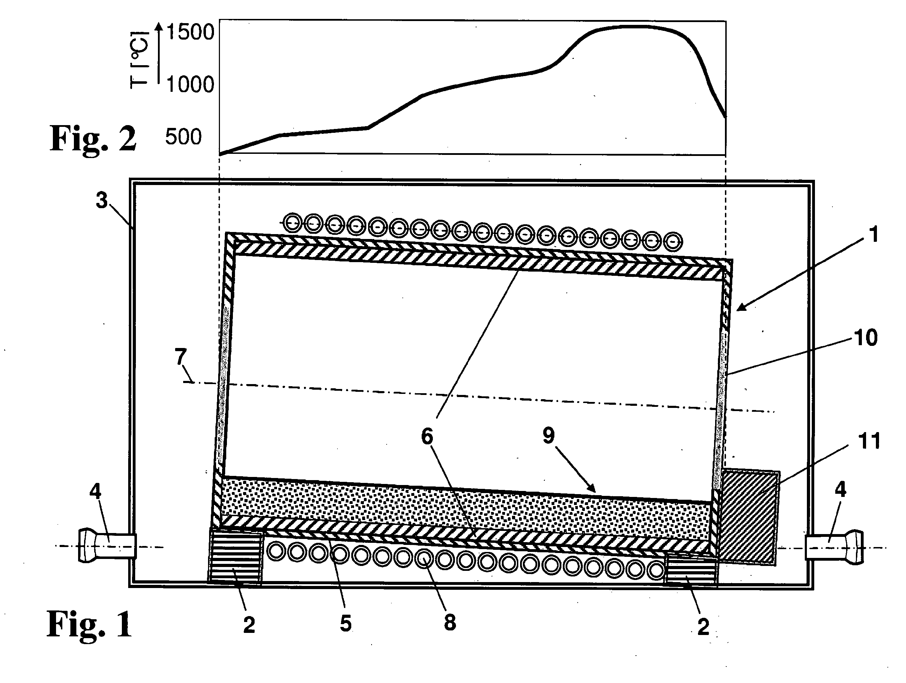

**Figur 1** zeigt einen auf Laufrollen 2 gelagerten Drehrohrofen 1, der innerhalb einer geschlossenen Kammer 3 angeordnet ist, die über einen Gasanschluss 4 evakuierbar und mit einem Behandlungsgas flutbar und spülbar ist.

Der Drehrohrofen 1 weist im Wesentlichen einen Rahmen 5 aus SiC auf, in dem ein Drehrohr 6 aus synthetisch hergestelltem Al₂O₃ (Handelsname Alsint) mit einem Innendurchmesser von 150 mm und einer Länge von 1,8 m fixiert ist. Das Drehrohr 6 ist um eine Mittelachse 7 rotierbar und mittels einer am Außenmantel vorgesehenen Widerstandsheizeinrichtung 8 beheizbar.

Der Drehrohrofen 1 ist in Längsrichtung 7 gegenüber der Horizontalen leicht geneigt, um den Transport einer Schüttung aus porösem SiO₂-Granulat 9 von der Einlaufseite des Drehrohrofens 1 zur Auslaufseite 10 herbeizuführen. An der Auslaufseite 10 ist ein Austraggehäuse 11 für verglaste Quarzglaskörnung angeordnet.

Im Folgenden wird ein Ausführungsbeispiel für das erfindungsgemäße Verfahren näher beschrieben:

### Herstellung, Trocknung und Reinigung von SiO₂-Granulat

### Beispiel A

Das Granulat wurde durch Granulation eines Schlickers mit 60 Gew.-% Restfeuchte aus pyrogener Kieselsäure (nanoskaliges SiO₂-Pulver, SiO₂-Sootstaub) und VE-Wasser im Intensivmischer hergestellt. Nach der Granulation beträgt die Restfeuchte <20%. Das Granulat wurde auf Korngrößen < 3mm abgesiebt.

Durch Trocknung bei 400°C in einem Drehrohrofen (Durchsatz: 20 kg/h) unter Luft wurde die Restfeuchte auf <1 % abgesenkt. Es erfolgt eine Absiebung auf die Fraktion 150-750 µm (D10-Wert ca. 200 µm, D90-Wert ca. 400 µm).

Anschließend erfolgt eine Reinigung und weitere Trocknung in HCL-haltiger Atmosphäre im Drehrohrofen bei einer Maximaltemperaturen von 1040 °C (Durchsatz: 10 kg/h). Dabei wird die spezifische Oberfläche (BET) um ca. 50% verringert.

Es wurde ein SiO₂-Granula aus synthetischem, undotiertem Quarzglas mit hoher Reinheit erhalten. Es besteht im Wesentlichen aus porösen, sphärischen Teilchen mit einer Teilchengrößenverteilung mit einem D10-Wert von 200 µm, einem D90-Wert von 400 µm und einem mittleren Teilchen-Durchmesser (D50-Wert) von 300 µm.

### Beispiel B

Das Granulat wurde durch Schnellgranulation aus pyrogener Kieselsäure (nanoskaliges SiO₂-Pulver, SiO₂-Sootstaub und VE-Wasser im Intensivmischer hergestellt. Dazu wird VE-Wasser im Intensivmischer vorgelegt und unter Mischung pyrogene Kieselsäure zugegeben, bis die Restfeuchte ca. 23 Gew.-% beträgt und ein Granulat hergestellt ist. Das Granulat wird auf Korngrößen ≤ 2mm abgesiebt. Durch Trocknung bei 350 °C in einem Drehrohrofen (Durchsatz 15 kg/h) unter Luft wird die Restfeuchte auf < 1% abgesenkt. Es erfolgt keine weitere Absiebung.

Anschließend erfolgt eine Reinigung und weitere Trocknung in HCI-haltiger Atmosphäre im Drehrohrofen bei Temperaturen von 1050 - 1150 °C (Durchsatz: 10 kg/h).

Die Summe chemischer Verunreinigungen wird bei der Heißchlorierung auf kleiner 1/10 des Ausgangsmaterials verringert (d.h. auf < 10 ppm). Das Granulat besteht im Wesentlichen aus porösen, sphärischen Teilchen mit einer Teilchengrößenverteilung mit einem D10-Wert von 300 µm, einem D90-Wert von 450 µm und einem mittleren Teilchen-Durchmesser (D50-Wert) von 350 µm.

### Verglasen des Granulats

Dem um seine Rotationsachse 7 mit eine Umdrehungsgeschwindigkeit von 8 U/min rotierenden Drehrohr 6 wird mit einer Zufuhrrate von 15 kg/h kontinuierlich undotiertes, poröses SiO₂-Granulat 9 zugeführt.

Das Drehrohr 6 ist in Längsrichtung 7 im spezifischen Schüttwinkel der Granulatteilchen 9 geneigt, so dass sich über seine Länge eine gleichmäßige Dicke der Granulat-Schüttung einstellt.

Die Kammer 3 wird von Zeit zu Zeit evakuiert und anschließend mit Helium geflutet. Die Granulat-Schüttung 6 wird kontinuierlich umgewälzt und dabei mittels der Widerstandsheizeinrichtung 8 innerhalb des Drehrohres 6 erhitzt und dabei allmählich verglast. Die Maximaltemperatur wird kurz vor dem Austragende 10 erreicht. Das Drehrohr 6 aus Al₂O₃ hält dieser Temperatur ohne weiteres stand.

Ein typisches axiales Temperaturprofil über die Länge des Drehrohres 6 ist im Diagramm von **Figur 2** schematisch dargestellt. Auf der y-Achse ist die Temperatur T der Oberfläche der Granulat-Schüttung 9 (ermittelt mittels Pyrometer) gegen die axiale Position im Drehrohr 6 aufgetragen. Unmittelbar nach dem Zuführen des Granulats wird dieses bei einer Temperatur um 500 °C während einer Dauer von 30 min getrocknet, und danach bei allmählich steigender Temperatur bei etwa 1000 °C bis 1300 °C thermisch vorverdichtet. Dabei findet gleichzeitig ein Austausch des in dem porösen Granulat vorhandenen Gases durch Helium statt. Dieser Verdichtungs- und Gasaustauschvorgang dauert etwa 60 min. Anschließend wird die Granulat-Schüttung 9 zum vollständigen Verglasen aufgeheizt und erreicht dabei eine Maximaltemperatur um 1460 °C. Die mittlere Verweilzeit im Drehrohrofen 6 beträgt etwa 3h. Nach dem anschließenden Abkühlen wird das verglaste Granulat aus dem Drehrohrofen 9 entnommen.

Die oben genannten Prozessparameter führen in Verbindung mit der Aufenthaltsdauer des Granulats 9 im Drehrohrofen 1 und der Heliumatmosphäre dazu, dass die offene Porosität weitgehend verschwindet. Die Oberfläche ist dicht. Kommt es zu Agglomeraten, werden diese infolge der mechanischen Beanspruchung in der sich bewegenden Granulat-Schüttung oder durch Vibration des Drehrohres wieder aufgelöst.

Gleichzeitig kommt es durch Granulatteilchen 9, die mit der Wandung des Drehrohres 6 in Kontakt kommen, zu einem gleichmäßigen Abrieb von Al₂O₃, das auf die Oberfläche der Granulatteilchen 9 und in deren Poren gelangt. Die so erzeugte, verglaste Quarzglaskörnung weist eine homogene Dotierung mit Al₂O₃ um 15 Gew.-ppm auf. Wegen der schlechten Benetzbarkeit von Al₂O₃ mit Quarzglas werden Anhaftungen an der Innenwandung des Drehrohres 6 weitgehend vermieden.

Die vollständig verglaste und homogen dotierte Quarzglaskörnung weist eine Dichte von mehr als 2,0 g/cm³ und eine BET-Oberfläche von weniger als 1 m²/g auf. Sie wird mittels der Austrageinrichtung 11 kontinuierlich entnommen.

Die Quarzglaskörnung wird zur Herstellung der Außenschicht eines Quarzglastiegels eingesetzt, wobei die viskositätserhöhende Wirkung der Al₂O₃ Dotierung zu einer Erhöhung der Standzeit des Quarzglastiegels beiträgt.

Im Folgenden werden weitere Ausführungsbeispiel für das Verglasen von porösem SiO₂-Granulat im Drehrohrofen unter He-Atmosphäre gemäß der Erfindung erläutert:

### Beispiel 1 - unter Einsatz des Granulats von Beispiel A

In einem Vorversuch wurde das Granulat an Umgebungsatmosphäre (Luft) bei einer Maximaltemperatur von 1350 °C gesintert. Das Material haftet bei Temperaturen > 1350 °C am Drehrohr an. Das Granulat zeigt Sintererscheinungen, viele Partikel sind jedoch nicht vollständig gesintert.

Bei einer ersten Abwandlung dieser Verfahrensweise wurde das Granulat unter einer He-Atmosphäre im Spülbetrieb bei einem Durchfluss von 1,1 m³/h und einer Maximaltemperatur von 1350 °C gesintert.

Die so erzeugte Quarzglaskörnung ist homogen angesintert, nur wenige Partikel sind nicht gesintert. Sie ließ sich in der Lichtbogenschmelze im Rahmen der Fertigung von Quarzglastiegeln transparent und recht blasenarm verglasen.

Bei einer zweiten Abwandlung dieser Verfahrensweise wurde das Granulat ebenfalls unter He-Atmosphäre im Spülbetrieb bei einem Durchfluss von 2,1 m³/h und einer Maximaltemperatur von 1400 °C gesintert. Das Material haftet dabei leicht am Drehrohr an. Durch mechanische Vibrationen (Klopfen und Rütteln) des Drehrohres konnten die Anhaftungen vermieden werden. Dadurch ergab sich jedoch auch ein höherer Durchsatz (von 2 kg/h auf 4 kg/h), der den Grad des Sinterns verschlechterte. Durch Veränderung der Neigung konnte der Durchsatz wieder verringert werden Das Granulat ist homogen angesintert, nur wenige Partikel sind nicht gesintert.

Die so erzeugte Quarzglaskörnung ist homogen gesintert (nur wenige Partikel sind wenig oder nicht gesintert). Sie ließ sich in der Lichtbogenschmelze im Rahmen der Fertigung von Quarzglastiegeln transparent und recht blasenarm verglasen.

### Beispiel 2 - unter Einsatz des Granulats von Beispiel B

Das Granulat wird an He-Atmosphäre im Spülbetrieb bei einem Durchfluss von 3,5 m³/h bei einer Maximaltemperatur von 1400 °C gesintert. Das Granulat zeigt Sintererscheinungen, große Partikel sind jedoch nicht durchgesintert. Offensichtlich ist bei den gegebenen Partikelgrößen und Temperaturen der Durchsatz mit 4 kg/h zu hoch. Das Material lässt sich in der Lichtbogenschmelze nicht blasenfrei verglasen, es sind feinblasige opake Bereiche zu erkennen.

Bei einer Abwandlung des Verfahrens wurde der Durchsatz durch Verringerung der Drehzahl und Neigung auf 2,4 kg/h verringert und das Granulat unter He-Atmosphäre im Spülbetrieb bei einem Durchfluss von 3,5 m³/h bei 1400 °C gesintert. Die so erzeugte Quarzglaskörnung ist noch nicht homogen gesintert. Erst bei einer Erhöhung der Maximaltemperatur auf 1430 °C (bei sonst gleichen Parametern) wurde eine nahezu transparente Quarzglaskörnung erhalten. Bei noch höheren Temperaturen neigt das Granulat mehr und mehr zum Anhaften am Drehrohr.

Die so erzeugte Quarzglaskörnung ließ sich in der Lichtbogenschmelze im Rahmen der Fertigung von Quarzglastiegeln zu transparenten und blasenarmen Schichten verglasen.

Bei einer weiteren Abwandlung des Verfahrens wurde das Granulat zweimal hintereinander unter He-Atmosphäre bei einem Durchfluss von 3,5 m³/h gesintert. Der erste Durchlauf erfolgte bei 1400 °C und der zweite Durchlauf bei 1450°C. Dabei wurden kaum Anhaftungen beobachtet.

Die so erhaltene Quarzglaskörnung ist vollständig und transparent verglast. Nur bei großen Partikeln sind blasenförmige Gaseinschlüsse zu erkennen. Sie lässt sich im Rahmen der Fertigung von Quarzglastiegeln zu transparenten und blasenarmen Schichten verglasen.

## Patentansprüche

1. Verfahren zur Herstellung synthetischer Quarzglaskörnung durch Verglasen eines rieselfähigen SiO₂-Granulats, umfassend folgende Verfahrensschritte:
(a) Granulation pyrogen hergestellter Kieselsäure unter Bildung des Si02-Granulat aus porösen Granulatteilchen (9),
(b) Trocknen des SiO₂-Granulats,
(c) Reinigen des SiO₂-Granutats durch Erhitzen in einer halogenhaltigen Atmosphäre in einem Reinigungsofen,
(d) Verglasen des gereinigten SiO₂-Granulats durch Sintern in einem Verglasungsofen unter Bildung der Quarzglaskörnung,
wobei das Trocknen, Reinigen und Verglasen des SiO₂-Granulats jeweils in einem um eine Mittelachse (7) rotierenden Drehrohr (6) eines Drehrohrofens erfolgt, wobei der zum Verglasen eingesetzte Drehrohrofen ein Drehrohr (6) aufweist, dessen Innenwandung aus einem keramischen Werkstoff, , nämlich aus Al₂O₃ besteht, der eine höhere Erweichungstemperatur als undotiertes Quarzglas hat, der als Dotierstoff die Viskosität von Quarzglas erhöht, und der durch Abrieb als Dotierstoffquelle für die Quarzglaskörnung dient, wodurch eine Al₂O₃-Dotierung der Quarzglaskörnung im Bereich von 1 bis 20 Gew.-ppm erzeugt wird und wobei das Drehrohr (6) mit einem stickstoffarmen Behandlungsgas geflutet oder mit dem Behandlungsgas gespült wird, das mindestens 30 Vol.% Helium und/oder Wasserstoff enthält.

2. Verfahren nach Anspruch 1, **dadurch gekennzeichnet, dass** das Trocknen des Granulats gemäß Verfahrensschritt (b) durch Erwärmen unter Luft bei einer Temperatur im Bereich zwischen 200 und 600 °C erfolgt.

3. Verfahren nach Anspruch 1 oder 2, **dadurch gekennzeichnet, dass** das Reinigen im Drehrohr gemäß Verfahrensschritt (c) unter chlorhaltiger Atmosphäre bei einer Temperatur im Bereich zwischen 900 und 1250 °C erfolgt.

4. Verfahren nach einem der vorhergehenden Ansprüche , **dadurch gekennzeichnet, dass** das Behandlungsgas beim Verglasen gemäß Verfahrensschritt (d) mindestens 50 % Helium und/oder Wasserstoff enthält, vorzugsweise mindestens 95 %.

5. Verfahren nach einem der vorhergehenden Ansprüche, **dadurch gekennzeichnet, dass** die Granulatteilchen (9) beim Verglasen gemäß Verfahrensschritt (d) auf eine Temperatur im Bereich von 1300 °C bis 1600 °C erhitzt werden.

6. Verfahren nach Anspruch 5, **dadurch gekennzeichnet, dass** die Granulatteilchen (9) einer Vibration unterzogen werden.

7. Verfahren nach Anspruch 5 oder 6, **dadurch gekennzeichnet, dass** das Erhitzen der Granulatteilchen (9) mittels einer das Drehrohr (6) umgebenden Widerstandsheizeinrichtung (8) erfolgt.

8. Verfahren nach Anspruch 1, **dadurch gekennzeichnet, dass** der Werkstoff der Drehrohr-Innenwandung einen Alkaligehalt von weniger als 0,5% aufweist.

9. Verfahren nach Anspruch 1 oder 7, **dadurch gekennzeichnet, dass** die Drehrohr-Innenwandung aus synthetisch hergestelltem Al₂O₃ besteht.

10. Verfahren nach einem der Ansprüche 5 bis 9, **dadurch gekennzeichnet, dass** das Drehrohr (6) vollständig aus der Keramik besteht.

11. Verfahren nach einem der vorhergehenden Ansprüche, **dadurch gekennzeichnet, dass** die Granulatteilchen (9) eine mittlere Korngröße zwischen 20 und 2000 µm, vorzugsweise zwischen 100 µm und 400 µm, aufweisen (jeweils D₅₀-Wert).

12. Verfahren nach einem der vorhergehenden Ansprüche, **dadurch gekennzeichnet, dass** die Granulatteilchen (9) eine enge Teilchengrößenverteilung aufweisen, wobei der dem D₉₀-Wert zugeordnete Teilchendurchmesser maximal doppelt so groß ist wie der dem D₁₀-Wert zugeordnete Teilchendurchmesser.

## Claims

1. A method for producing synthetic quartz glass granules by vitrifying a freeflowing SiO₂ granulate, said method comprising the following method steps:
(a) granulating pyrogenically produced silicic acid so as to form the SiO₂ granulate made of porous granulate particles (9);
(b) drying the SiO₂ granulate;
(c) cleaning the SiO₂ granulate by heating in an atmosphere containing halogen in a cleaning furnace;
(d) vitrifying the cleaned SiO₂ granulate by sintering in a vitrifying furnace so as to form the quartz glass granules,
wherein drying, cleaning and vitrifying of the SiO₂ granulate are each carried out in a rotary tube (6) of a rotary furnace, said rotary tube rotating about a central axis (7), wherein the rotary furnace used for vitrifying has a rotary tube (6) which consists at least over a sub-length of an inner wall thereof of a ceramic material, namely of Al₂O₃, that has a softening temperature that is higher than a softening temperature of undoped quartz glass, wherein said ceramic material used as a substance for doping quartz glass enhances the viscosity of quartz glass, wherein the synthetic quartz glass granules are doped with Al₂O₃ from the inner wall of the rotary tube in the range of 1 to 20 wt.-ppm, and wherein the rotary tube (6) is flooded with a low-nitrogen treatment gas or flushed with the treatment gas, said gas containing at least 30 vol.% helium and/or hydrogen.

2. The method according to claim 1, **characterized in that** the drying of the granulate according to method step (b) is carried out by heating in air at a temperature in the range between 200°C and 600°C.

3. The method according to claim 1 or 2, **characterized in that** the cleaning in the rotary tube according to method step (c) is carried out in a chlorinecontaining atmosphere at a temperature in the range between 900°C and 1250°C.

4. The method according to any one of the preceding claims, **characterized in that** the treatment gas during vitrification according to method step (d) contains at least 50% helium and/or hydrogen, preferably at least 95%.

5. The method according to any one of the preceding claims, **characterized in that** the granulate particles (9) during vitrification according to method step (d) are heated to a temperature ranging from 1300°C to 1600°C.

6. The method according to claim 5, **characterized in that** the granulate particles (9) are subjected to vibration.

7. The method according to claim 5 or 6, **characterized in that** the heating of the granulate particles (9) is carried out using a resistance heater (8) surrounding the rotary tube (6).

8. The method according to claim 1, **characterized in that** the material of the inner wall of the rotary tube has an alkali content of less than 0.5%.

9. The method according to claim 1 or 7, **characterized in that** the inner wall of the rotary tube consists of synthetically produced Al₂O₃.

10. The method according to any one of claims 5 to 9, **characterized in that** the rotary tube (6) consists entirely of ceramics.

11. The method according to any one of the preceding claims, **characterized in that** the granulate particles (9) have a mean grain size between 20 µm and 2000 µm, preferably between 100 µm and 400 µm (D₅₀ value each time).

12. The method according to any one of the preceding claims, **characterized in that** the granulate particles (9) have a narrow particle size distribution, such that the particle diameter assigned to a D₉₀ value is not more than twice as large as the particle diameter assigned to a D₁₀ value.

## Revendications

1. Procédé pour la fabrication de grains de verre de quartz synthétique par vitrification d'un grain fluide SiO₂, comprenant les étapes suivantes de procédé :
(a) granulation d'acide silicique pyrogéné par formation du granulé de SiO₂ à partir de particules de granulé poreuses (9),
(b) séchage du granulé deSiO₂,
(c) nettoyage du granulé de SiO₂ par chauffage dans une atmosphère contenant de l'halogène dans un four de nettoyage,
(d) vitrification du granulé de SiO₂ nettoyé par frittage dans un four de vitrification par formation du grain de verre de quartz,
le séchage, le nettoyage et la vitrification du granulé de SiO₂ s'effectuant respectivement dans un tube rotatif (6) tournant autour d'un axe médian (7), le four tubulaire rotatif utilisé pour la vitrification présentant un tube rotatif (6) dont la paroi interne se compose d'un matériau céramique notamment du Al₂O₃, qui présente une température de ramollissement supérieure à celle du verre de quartz non dopé, qui en tant que substance de dopage augmente la viscosité du verre de quartz et qui sert par usure en tant que source de dopage au grain du verre de quartz, ce qui génère un dopage d'Al₂O₃ du grain de verre de quartz compris entre 1 et 20 pour cent en poids et le tube rotatif (6) étant rempli d'un gaz de traitement pauvre en azote ou est nettoyé avec le gaz de traitement qui contient au moins 30 % en volume d'hélium et/ou d' hydrogène.

2. Procédé selon la revendication 1, **caractérisé en ce que** le séchage du granulé s'effectue selon l'étape de procédé (b) par réchauffement par air à une température comprise entre 200 et 600°C.

3. Procédé selon la revendication 1 ou 2, **caractérisé en ce que** le nettoyage s'effectue dans le tube rotatif selon l'étape de procédé (c) sous une atmosphère contenant du chlore à une température comprise entre 900 et 1250°C.

4. Procédé selon l'une des revendications précédentes, **caractérisé en ce que** le gaz de traitement contient lors de la vitrification (d) selon l'étape de procédé (d) au moins 50 % d'hélium et/ou d'hydrogène, de préférence au moins 95 %.

5. Procédé selon l'une des revendications précédentes, **caractérisé en ce que** les particules de granulé (9) sont chauffées lors de la vitrification selon l'étape de procédé (d) à une température comprise entre 1300 °C et 1600 °C.

6. Procédé selon la revendication 5, **caractérisé en ce que** les particules de granulé (9) sont soumises à une vibration.

7. Procédé selon la revendication 5 ou 6, **caractérisé en ce que** le chauffage des particules de granulé (9) s'effectue au moyen d'un dispositif de chauffage par résistance (8) entourant le tube rotatif (6).

8. Procédé selon la revendication 1, **caractérisé en ce que** le matériau de la paroi interne du tube rotatif présente une teneur en alcalin inférieur à 0,5 %.

9. Procédé selon la revendication 1 ou 7, **caractérisé en ce que** la paroi interne du tube rotatif se compose d'Al₂O₃ fabriqué synthétiquement.

10. Procédé selon l'une des revendications 5 à 9, **caractérisé en ce que** le tube rotatif (6) se compose complétement de céramique.

11. Procédé selon l'une des revendications précédentes, **caractérisé en ce que** les particules de granulé (9) présentent une taille moyenne de particule comprise entre 20 et 2000 µm de préférence entre 100 µm et 400 µm (respectivement une valeur D₅₀).

12. Procédé selon l'une des revendications précédentes, **caractérisé en ce que** les particules de granulé (9) présentent une répartition de taille de particules étroite, le diamètre de particule associé à la valeur D₉₀ étant au maximum deux fois plus important que le diamètre de particule associé à la valeur D₁₀.
